# EUROPEAN PATENT APPLICATION

(11) **EP 4 693 684 A1**
(43) Date of publication of application: **11.02.2026**
(21) Application number: 25774834.3
(22) Date of filing: 22.01.2025
(51) Int. Cl.: H01M 50/383, H01M 50/30, H01M 50/317, H01M 50/211

(54) **SECONDARY BATTERY WITH ENHANCED SAFETY**

(30) Priority: 22.03.2024 KR 20240039437
(71) Applicant: LG Energy Solution, Ltd., Seoul 07335 (KR)
(72) Inventor: SON, Hong Se, Daejeon 34122 (KR); KWON, Hee Yong, Daejeon 34122 (KR)
(74) Representative: Plasseraud IP
(86) International application number: PCT/KR2025/001199
(87) International publication number: WO 2025/198170

(57) **Abstract**

Disclosed is a secondary battery including at least one battery cell, a housing unit having a first inner space configured to receive the at least one battery cell, the housing unit having a side surface with a through-hole, a venting device mounted in the through-hole, the venting device being configured to discharge gas generated in the housing unit to outside of the housing unit, and a particle blocking member detachably coupled to the outside of the side surface of the housing unit, the particle blocking member covering the venting device, wherein the particle blocking member includes a blocking portion including a first surface facing the side surface of the housing unit, a second surface extending from an upper end of the first surface toward the side surface of the housing unit, and a pair of third surfaces extending from both side ends of the first surface toward the side surface of the housing unit, the blocking portion having a second inner space defined therein, and a receiving portion at a lower end of the blocking portion.

## Description

### [Technical Field]

This application claims the benefit of priority to Korean Patent Application No. 10-2024-0039437 filed on March 22, 2024, the disclosure of which is incorporated herein by reference in its entirety.

The present invention relates to a secondary battery with improved safety, and more particularly to a secondary battery with improved safety that has a structure capable of quickly discharging gas generated during thermal runaway of the secondary battery over a long distance while limiting the movement distance of particles, thereby suppressing the occurrence of fire.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Meanwhile, secondary batteries have excellent electrical properties, but there is a problem of so-called swelling, in which secondary batteries expand due to heat and gas generated by the decomposition reaction of an active material and an electrolyte, which are components of the battery, in abnormal operating conditions such as overcharging, overdischarging, exposure to high temperatures, and electrical short circuit. Swelling accelerates such decomposition reaction, which may lead to explosion and ignition of secondary batteries due to thermal runaway.

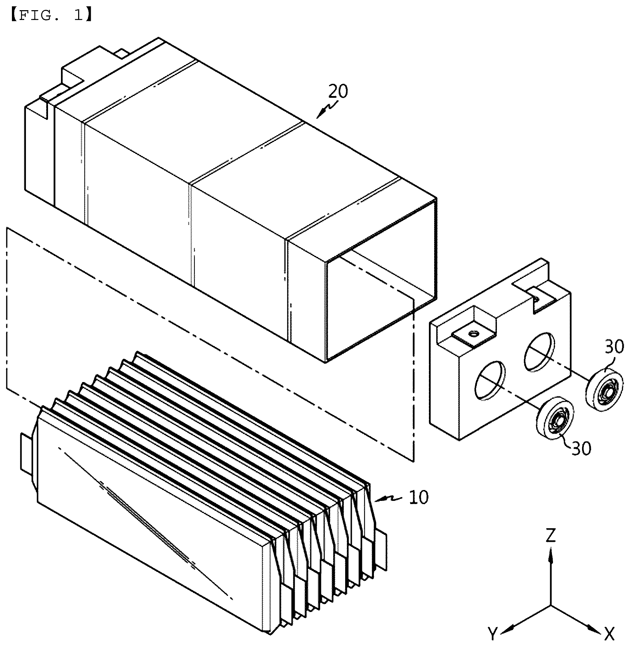

FIG. 1 is a perspective view of a conventional secondary battery. As shown in FIG. 1, the secondary battery includes at least one battery cell 10, a housing unit 20 configured to receive the battery cell 10, and a safety valve 30 configured to discharge gas generated in the housing unit 20 to the outside.

When thermal runaway occurs in the battery cell, high-pressure venting gas is discharged to the outside through the safety valve 30, whereby it is possible to prevent explosion of the secondary battery.

However, when thermal runaway occurs in the battery cell, flare, which is a flash of flame that pops out like a flash of light from a weakly sealed portion, spark particles, which are particles with high heat emitted by the detachment of an internal electrode and melting of an aluminum current collector, and high-temperature vent gas are generated. In particular, they do not stay at the positions where they are generated, but move to nearby modules, including nearby battery cells, and objects in which secondary batteries are mounted, so there is a high possibility that they will lead to a major accident.

In addition, during the discharge process, the spark particles may block the passage of the safety valve 30, preventing the discharge of venting gas, or may accumulate in the passage, preventing the safety valve 30 from functioning properly.

### (Prior Art Document)

(Patent Document 1) Korean Patent Application Publication No. 10-2023-0098080

### [Disclosure]

### [Technical Problem]

The present invention has been made in view of the above problems, and it is an object of the present invention to provide a secondary battery with improved safety capable of quickly discharging venting gas and particles generated in the secondary battery to the outside, thereby preventing explosion or suppressing the occurrence of fire.

It is another object of the present invention to provide a secondary battery with improved safety capable of discharging venting gas generated in the secondary battery over a long distance while limiting the movement distance of particles, thereby suppressing the occurrence of fire.

### [Technical Solution]

As a technical means for achieving the above objects, a secondary battery according to an embodiment of the present invention includes at least one battery cell (100), a housing unit (200) having a first inner space (S1) configured to receive the at least one battery cell (100), the housing unit having a side surface with a through-hole (211), a venting device (300) mounted in the through-hole (211), the venting device being configured to discharge gas generated in the housing unit (200) to outside of the housing unit, and a particle blocking member (400) detachably coupled to the outside of the side surface of the housing unit (200), the particle blocking member covering the venting device (300), wherein the particle blocking member (400) includes a blocking portion (410) including a first surface (411) facing the side surface of the housing unit (200), a second surface (412) extending from an upper end of the first surface (411) toward the side surface of the housing unit (200), and a pair of third surfaces (413) extending from both side ends of the first surface (411) toward the side surface of the housing unit (200), the blocking portion having a second inner space (S2) defined therein, and a receiving portion (420) at a lower end of the blocking portion (410).

Also, in the secondary battery according to the embodiment of the present invention, at least one of the first surface (411), the second surface (412), or the third surface (413) may be a mesh plate having a mesh hole formed therein.

Also, in the secondary battery according to the embodiment of the present invention, the mesh hole may have a diameter less than the size of a particle that the venting device (300) is configured to discharge.

Also, in the secondary battery according to the embodiment of the present invention, the mesh hole has an inner diameter gradually decreasing toward the side surface of the housing unit (200).

Also, in the secondary battery according to the embodiment of the present invention, the receiving portion (420) may include a fifth surface (422) extending from a lower end of the first surface (411) facing the side surface of the housing unit (200), a pair of sixth surfaces (423) extending from both side ends of the fifth surface (422) toward the side surface of the housing unit (200), a seventh surface (424) extending from one end of each of the pair of sixth surfaces (423) in parallel with the fifth surface (422), and a fourth surface (421) connecting a lower end of the fifth surface (422), a lower end of each of the pair of sixth surfaces (423), and a lower end of the seventh surface (424) to each other.

Also, in the secondary battery according to the embodiment of the present invention, the receiving portion (420) may further include a partition wall (426) formed between the second inner space (S2) of the blocking portion (410) and a third inner space (S3) of the receiving portion (420), and the partition wall (426) may have a communication hole (426a) allowing the second inner space (S2) and the third inner space (S3) to communicate with each other therethrough.

Also, in the secondary battery according to the embodiment of the present invention, the partition wall (426) may further include a communication channel (426b) formed in a channel shape as a result of extension of a part of the communication hole (426a).

Also, in the secondary battery according to the embodiment of the present invention, the width of the fifth surface (422) may be greater than the width of the first surface (411), and the receiving portion (420) may further include an eighth surface (425) extending from a lower end of the third surface (413) along an upper end of the fifth surface (422).

Also, in the secondary battery according to the embodiment of the present invention, the receiving portion (420) may be slidably coupled to the blocking portion (410).

Also, the secondary battery according to the embodiment of the present invention may further include a connecting member (430) extending from one end of at least one of the first surface (411), the second surface (412), the third surface (413), and the fourth surface (421), the connecting member allowing the particle blocking member (400) to be coupled to the side surface of the housing unit (200) therethrough.

Also, in the secondary battery according to the embodiment of the present invention, a first fastening hole (212) may be formed on the side surface of the housing unit (200), and a second fastening hole (431) communicating with the first fastening hole (212) may be formed in the connecting member (430).

Also, the secondary battery according to the embodiment of the present invention may further include a fastening member (500) extending through both the first fastening hole (212) and the second fastening hole (431) and fastening in the state in which the first fastening hole (212) and the second fastening hole (431) overlap each other.

Also, in the secondary battery according to the embodiment of the present invention, the receiving portion (420) may be a fourth surface (421) connecting a lower end of the first surface (411) and a lower end of each of the pair of third surfaces (413) to each other, and the fourth surface (421) may be formed in a plate shape having no mesh hole.

Also, in the secondary battery according to the embodiment of the present invention, the venting device (300) may be a safety valve configured to open when the pressure in the first inner space (S1) is higher than a predetermined pressure and to close when the pressure in the first inner space (S1) is lower than the predetermined pressure.

Also, in the secondary battery according to the embodiment of the present invention, the housing unit (200) may be a module housing unit or a pack housing unit.

### [Advantageous Effects]

As is apparent from the above description, in a secondary battery with improved safety according to the present invention, a particle blocking member having mesh holes is coupled to the outside of a housing unit so as to cover a venting device, whereby it is possible to quickly discharge venting gas and particles generated in the housing unit to the outside, and therefore it is possible to prevent explosion or to suppress the occurrence of fire.

Also, in the secondary battery with improved safety according to the present invention, the particle blocking member has mesh holes each having a diameter less than the size of particles, whereby venting gas generated in the secondary battery is discharged over a long distance, but the movement distance of the particles is restricted, and therefore it is possible to suppress the occurrence of fire.

Also, in the secondary battery with improved safety according to the present invention, the particle blocking member is configured such that a blocking portion is slidably coupled to a receiving portion located under the blocking portion, whereby it is possible to receive particles blocked by the blocking portion and to easily collect the received particles.

### [Description of Drawings]

FIG. 1 is a perspective view of a conventional secondary battery.
FIG. 2 is an exploded perspective view of a secondary battery according to a first embodiment of the present invention.
FIG. 3 is a perspective view showing a venting device being mounted to a housing unit in the secondary battery according to the first embodiment of the present invention.
FIG. 4 is a side view showing the state of the venting device, which is mounted to the secondary battery according to the first embodiment of the present invention, before and after opening.
FIG. 5 is an enlarged perspective view of area A shown in FIG. 2.
FIG. 6 is a view showing the state in which a particle blocking member according to a first embodiment of the present invention is coupled to the housing unit via a fastening member.
FIG. 7 is a perspective view of the particle blocking member, which is mounted to the secondary battery according to the first embodiment of the present invention, when viewed from the inside.
FIG. 8 is a vertical sectional view of area B of the particle blocking member shown in FIG. 7.
FIG. 9 is a perspective view of a particle blocking member according to a second embodiment of the present invention when viewed from the inside.
FIG. 10 is a perspective view of a particle blocking member according to a third embodiment of the present invention when viewed from the inside.
FIG. 11 is a perspective view of a particle blocking member according to a fourth embodiment of the present invention when viewed from the inside.
FIG. 12 is a view of the particle blocking member according to the fourth embodiment of the present invention when viewed from the inside.
FIG. 13 is a view of a particle blocking member according to a fifth embodiment of the present invention when viewed from the inside.
FIG. 14 is a view of a particle blocking member according to a sixth embodiment of the present invention when viewed from the inside.
FIG. 15 is a perspective view of a particle blocking member according to a seventh embodiment of the present invention when viewed from the inside.
FIG. 16 is a view of the particle blocking member according to the seventh embodiment of the present invention when viewed from the inside.
FIG. 17 is a view of a particle blocking member according to an eighth embodiment of the present invention when viewed from the inside.
FIG. 18 is a view of a particle blocking member according to a ninth embodiment of the present invention when viewed from the inside.
FIG. 19 is a perspective view showing the state of a particle blocking member according to a tenth embodiment of the present invention before coupling to the housing unit.
FIG. 20 is a perspective view showing the state in which the particle blocking member according to the tenth embodiment of the present invention is coupled to the housing unit.
FIG. 21 is a view showing the state in which the particle blocking member according to the tenth embodiment of the present invention is coupled to the housing unit.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a secondary battery with improved safety according to the present invention will be described.

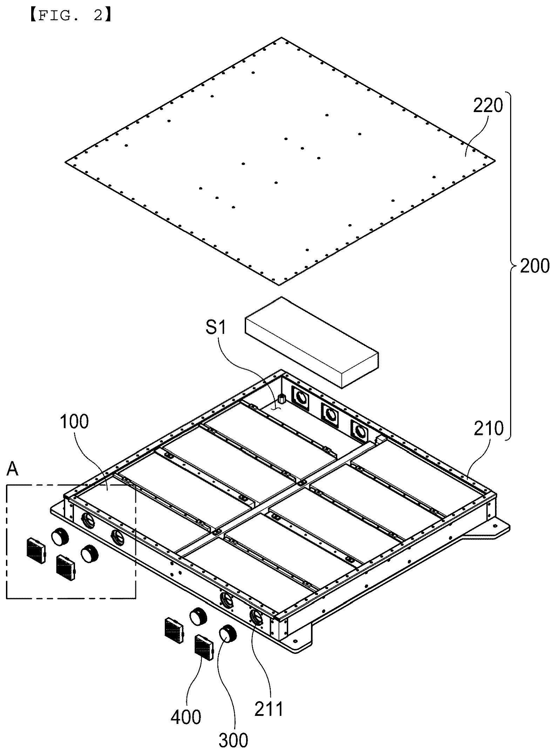

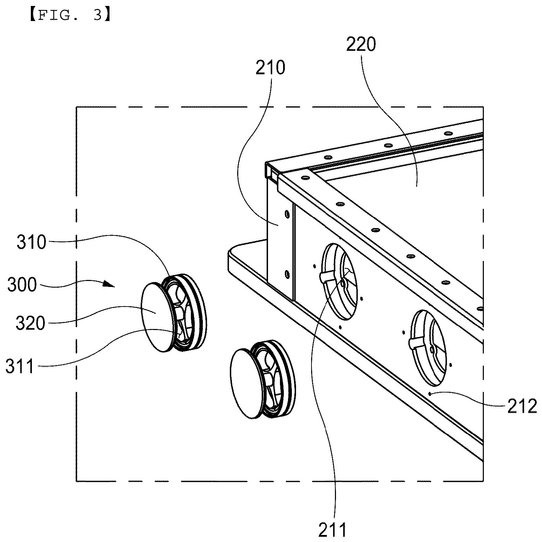

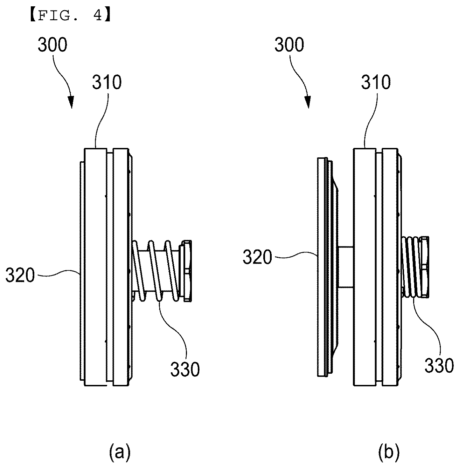

FIG. 2 is an exploded perspective view of a secondary battery according to a first embodiment of the present invention, FIG. 3 is a perspective view showing a venting device being mounted to a housing unit in the secondary battery according to the first embodiment of the present invention, and FIG. 4 is a side view showing the state of the venting device, which is mounted to the secondary battery according to the first embodiment of the present invention, before and after opening.

Referring to FIGs. 2 to 4, the secondary battery according to the present invention includes a battery cell 100, a housing unit 200, a venting device 300, and a particle blocking member 400.

First, the battery cell 100 may be provided in one or more. The battery cell 100 may be a pouch-shaped secondary battery including an electrode assembly, an electrode lead, and a battery case.

The electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler is further added as needed.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

The battery case, which receives the electrode assembly, is made of a laminate sheet including an outer covering layer, a metal layer, and an inner covering layer, and has a receiving portion formed therein.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

Meanwhile, the housing unit 200 may be provided with a first inner space S1 configured to receive the battery cell 100. The housing unit 200 may include a housing body 210 that is open at the top and has a first inner space S1 defined therein and a housing cover 220 located at the open top of the housing body 210.

Here, the housing unit 200 may be configured as a module housing unit or a pack housing unit. For example, if the housing unit 200 is a module housing unit, the secondary battery according to the present invention may be a battery module. In addition, as another example, if the housing unit 200 is a pack housing unit, the secondary battery according to the present invention may be a battery pack.

Each of the housing body 210 and the housing cover 220 may be made of a plastic material that is lightweight while having a certain degree of rigidity, and may be made of a material that protects components received therein from external impact and foreign matter.

In addition, at least one through-hole 211 may be formed in a side surface of the housing body 210, and the through-hole 211 may be a hole configured to allow the first inner space S1 of the housing body 210 to communicate with the external space therethrough.

The venting device 300 may be mounted in the through-hole 211 to discharge gas generated in the housing unit 200 to the outside.

For example, a fastening hole (not shown) may be formed in the side surface of the housing body 210 near the area where the through-hole 211 is formed, and the venting device 300 may be coupled to the housing body 210 through the fastening hole (not shown). Of course, the coupling means is not particularly limited as long as the venting device 300 can be detachably fastened to the through-hole 211.

The venting device 300 may be configured as a safety valve that opens when the pressure in the first inner space S1 is higher than a predetermined pressure and closes when the pressure in the first inner space S1 is lower than the predetermined pressure.

Specifically, the venting device 300 may include a base member 310 having a passage portion 311 formed therein, an opening and closing portion 320 configured to selectively come into tight contact with the base member 310 to open and close the passage portion 311, and an elastic member 330 configured to selectively provide elastic force to the opening and closing portion 320.

When the pressure in the first inner space S1 is higher than the elastic force of the elastic member 330, the opening and closing portion 320 may be spaced apart from the base member 310 to open the passage portion 311. In addition, when the pressure in the first inner space S1 is lower than the elastic force of the elastic member 330, the opening and closing portion 320 may come into tight contact with the base member 310 to close the passage portion 311.

That is, opening and closing of the venting device 300 is determined by the pressure in the first inner space S1, and when the pressure in the first inner space S1 is higher than the predetermined pressure, the passage portion 311 of the venting device 300 may be opened such that venting gas generated in the first inner space S1 can be discharged to the outside.

The venting device 300 may be configured as a safety valve that is obvious to those skilled in the art; however, the present invention is not limited thereto, and the venting device may be configured as any of various devices that can discharge gas generated in the housing unit 200 to the outside, and therefore a more detailed description thereof will be omitted.

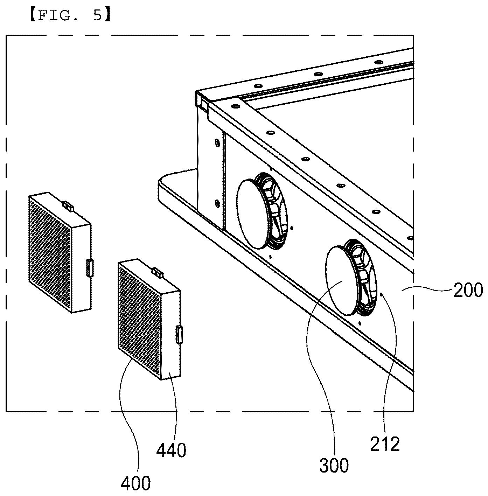

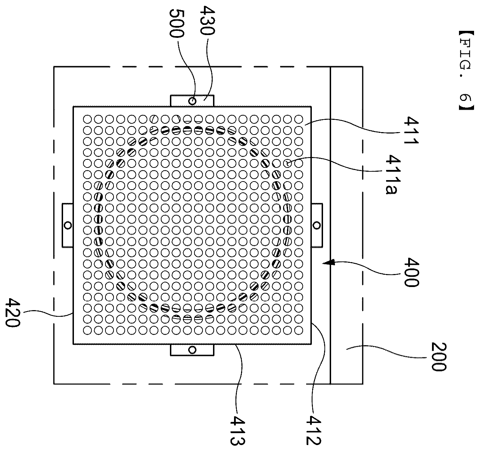

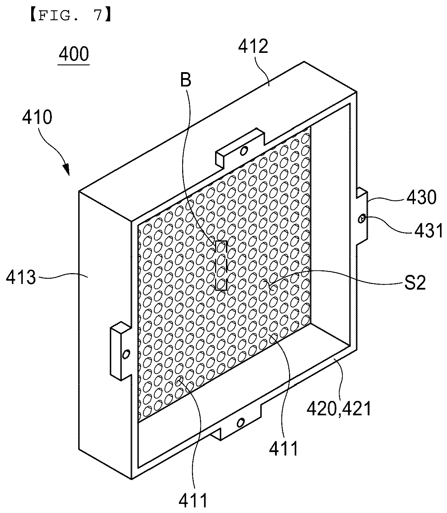

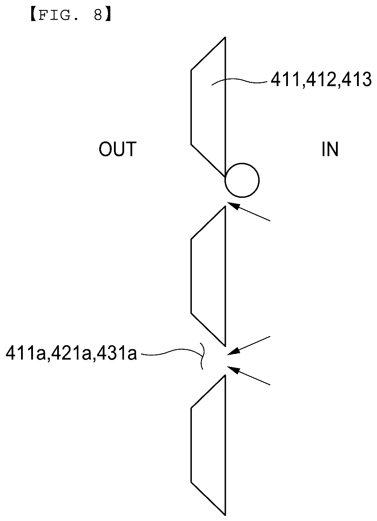

FIG. 5 is an enlarged perspective view of area A shown in FIG. 2, and FIG. 6 is a view showing the state in which a particle blocking member according to a first embodiment of the present invention is coupled to the housing unit via a fastening member. In addition, FIG. 7 is a perspective view of the particle blocking member, which is mounted to the secondary battery according to the first embodiment of the present invention, when viewed from the inside, and FIG. 8 is a vertical sectional view of area B of the particle blocking member shown in FIG. 7.

When the passage portion 311 of the venting device 300 is opened, not only venting gas but also numerous particles that can cause fire are discharged. The particle blocking member is configured to block particles that are discharged to the outside via the passage portion 311 from moving beyond a certain distance.

The particle blocking member 400, which performs the aforementioned function, may be formed so as to cover the outside of the venting device 300, and may include a blocking portion 410 and a receiving portion 420, each of which may be made of a metal or fire-resistant material.

First, the blocking portion 410 may include a first surface 411, a second surface 412, and a third surface 413, which may form a second inner space S2. More specifically, the first surface 411 is a front surface (11 o'clock direction in FIG. 7) facing the side surface of the housing body 210, and the second surface 412 is an upper surface (12 o'clock direction in FIG. 7) extending from an upper end of the first surface 411 toward the side surface of the housing body 210. The pair of third surfaces 413 may be a pair of side surfaces (2 o'clock and 8 o'clock directions in FIG. 7) extending from a side end of the first surface 411 toward the side surface of the housing body 210.

Here, the first surface 411 may be configured as a mesh plate in which first mesh holes 411a are formed.

Each of the first mesh holes 411a may be configured to have a diameter that is less than the size of particles discharged through the venting device 300. For example, on the assumption that the size of particles is 0.45 mm or less, the first mesh hole 411a may be formed to have a diameter of less than 0.45 mm such that venting gas is discharged through the first mesh hole 411a but the particles cannot be discharged through the first mesh hole.

In addition, the first mesh hole 411a may be formed so as to have an inner diameter gradually decreasing toward the side surface of the housing unit 200.

Although the size of the first mesh hole 411a is less than the size of particles, the particles are quickly discharged to the outside along with the venting gas, whereby the particles hit the first surface 411, and in this process, the particles may pass through the first mesh hole 411a or occlude the first mesh hole 411a.

However, if the inner diameter of the first mesh hole 411a is gradually decreased toward the side surface of the housing unit 200, it is possible to block the particles and to reduce occlusion of the first mesh hole 411a.

In the blocking portion 410, although the first surface 411 is configured as a mesh plate having first mesh holes 411a formed therein, each of the second surface 412 and the third surface 413 may be configured as a plate having mesh holes, and a lower part (6 o'clock direction in FIG. 7) may be configured in an open shape.

Meanwhile, the receiving portion 420 may be a fourth surface 421 located at a lower end of the blocking portion 410. The fourth surface 421 may be a lower surface (6 o'clock direction in FIG. 7) that connects a lower end of the first surface 411 of the blocking portion 410 and lower ends of the pair of third surfaces 413.

At this time, the fourth surface 421 may be formed in the shape of a plate having no mesh holes.

As a result, particles (e.g., spark particles) discharged together with venting gas may be blocked by the first surface 411, the second surface 412, and the third surface 413 constituting the particle blocking member 400 and then received in the receiving portion 420 provided under the blocking portion 410.

When thermal runaway occurs in the battery cell, flames and high-temperature particles, i.e., spark particles, which originate from the detachment of electrodes and a molten aluminum current collector, are ejected through a weakly sealed portion along with high-temperature vent gas.

However, when the particle blocking member 400 is provided, as in the present invention, the particles cannot move very far due to the blocking portion 410 and are received in the receiving portion 420, whereby it is possible to suppress the occurrence of fire in a surrounding secondary battery or an object having the secondary battery mounted therein.

Meanwhile, the particle blocking member 400 may include a connecting member 430 extending from one end of at least one of the first surface 411, the second surface 412, the third surface 413, and the fourth surface 421 and configured to detachably connect the particle blocking member 400 to the side surface of the housing unit 200.

For example, the connecting member 430 may extend from one end of at least one of the first surface 411, the second surface 412, the third surface 413, and the fourth surface 421 so as to face the side surface of the housing unit 200. That is, the connecting member 430 may be provided parallel to the side surface of the housing unit 200.

For example, the connecting member 430 may extend outward from one end of the third surface 413 so as to face the side surface of the housing unit 200, and may be provided on both sides (3 o'clock and 9 o'clock directions in FIG. 6) of the particle blocking member 400. In addition, as another example, the connecting member 430 may extend outward from one end of each of the second surface 412 and the third surface 413 so as to face the side surface of the housing unit 200, may be provided at an upper part (12 o'clock direction in FIG. 6) and both sides (3 o'clock and 9 o'clock directions in FIG. 6) of the particle blocking member 400.

In addition, as another example, the connecting member 430 may extend outward from one end of each of the second surface 412, the third surface 413, and the fourth surface 421 so as to face the side surface of the housing unit 200, and may be provided at the upper part (12 o'clock direction in FIG. 6), both sides (3 o'clock and 9 o'clock directions in FIG. 6), and a lower part (6 o'clock direction in FIG. 6) of the particle blocking member 400.

In addition, a first fastening hole 212 may be formed in the side surface of the housing body 210, and a second fastening hole 431 configured to communicate with the first fastening hole 212 may be formed in the connecting member 430 (see FIG. 5).

The first fastening hole 212 may be formed in the vicinity of the through-hole 211 in which the venting device 300 is mounted, and more specifically, the second fastening hole 431 may be formed at the position corresponding to the position of the first fastening hole 212 so as to communicate with the first fastening hole 212.

At this time, the secondary battery according to the present invention may further include a fastening member 500, wherein the fastening member 500 may be configured to extend through both the first fastening hole 212 and the second fastening hole 431 for fastening in the state in which the first fastening hole 212 and the second fastening hole 431 overlap each other.

For example, a female thread may be formed at an inner surface of each of the first fastening hole 212 and the second fastening hole 431, and a male thread may be formed at an outer surface of the fastening member 500; however, the present invention is not limited thereto.

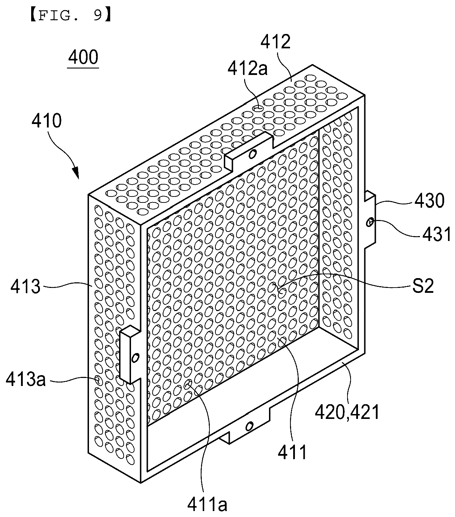

FIG. 9 is a perspective view of a particle blocking member according to a second embodiment of the present invention when viewed from the inside.

The particle blocking member 400 according to the second embodiment is identical in construction to the particle blocking member according to the first embodiment except that the formation position of the mesh holes is different. In the particle blocking member according to the second embodiment, a first surface 411, a second surface 412, and a third surface 413 may be configured as mesh plates having first mesh holes 411a, second mesh holes 412a, and third mesh holes 413a, respectively.

In this case, when particles are discharged from the first inner space S1 to the outside due to the pressure in the first inner space S1, the particles may be blocked by the first surface 411, the second surface 412, and the third surface 413, and may be moved to a receiving portion 420 without being discharged to the outside.

In addition, since the first mesh holes 411a are formed in the first surface 411, the second mesh holes 412a are formed in the second surface 412, and the third mesh holes 413a are formed in the third surface 413, venting gas in the first inner space S1 may be more easily discharged to the outside through the first mesh holes 411a, the second mesh holes 412a, and the third mesh holes 413a, and the venting gas may be discharged while being dispersed in different directions.

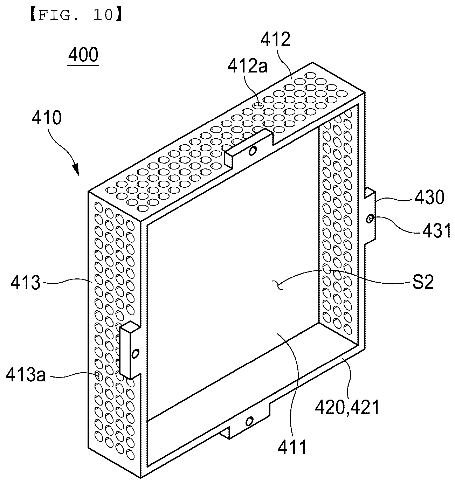

FIG. 10 is a perspective view of a particle blocking member according to a third embodiment of the present invention when viewed from the inside.

The particle blocking member 400 according to the third embodiment is identical in construction to the particle blocking member according to the first embodiment except that the formation position of the mesh holes is different. In the particle blocking member according to the third embodiment, a first surface 411 may be configured as a mesh plate having no mesh holes, and a second surface 412 and a third surface 413 may be configured as mesh plates having second mesh holes 412a and third mesh holes 413a, respectively.

In this case, when particles are discharged from the first inner space S1 to the outside due to the pressure in the first inner space S1, the particles may be blocked by the first surface 411, the second surface 412, and the third surface 413, and may be moved to a receiving portion 420 without being discharged to the outside.

In addition, since the second mesh holes 412a are formed in the second surface 412 and the third mesh holes 413a are formed in the third surface 413, venting gas in the first inner space S1 may be more easily discharged to the outside through the second mesh holes 412a and the third mesh holes 413a.

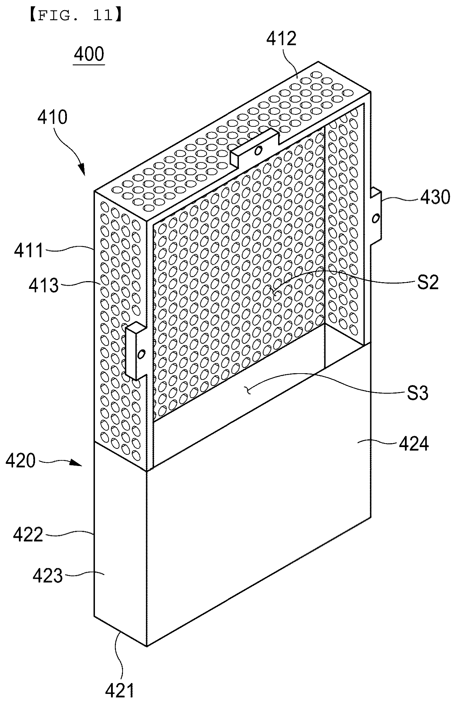

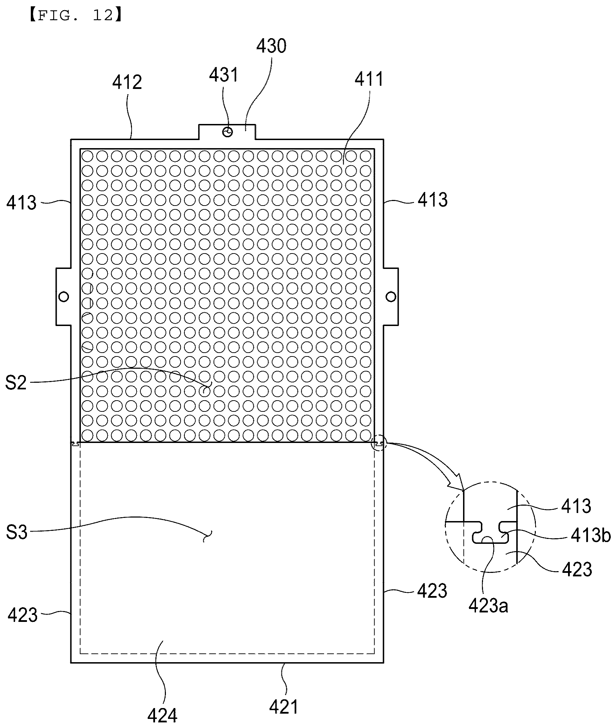

FIG. 11 is a perspective view of a particle blocking member according to a fourth embodiment of the present invention when viewed from the inside, and FIG. 12 is a view of the particle blocking member according to the fourth embodiment of the present invention when viewed from the inside.

The particle blocking member 400 according to the fourth embodiment is identical in construction to the particle blocking member according to the first embodiment except that a receiving portion 420 is different. The receiving portion 420 of the particle blocking member according to the fourth embodiment may include a fourth surface 421, a fifth surface 422, a sixth surface 423, and a seventh surface 424.

More specifically, first, the fifth surface 422 may be a front surface (11 o'clock direction in FIG. 11) extending from a lower end of a first surface 411 of a blocking portion 410 so as to face the side surface of the housing body 210, and the sixth surface 423 may be a pair of surfaces (2 o'clock and 8 o'clock directions in FIG. 11) extending from both side ends of the fifth surface 422 toward the side surface of the housing body 210. In addition, the seventh surface 424 may be a rear surface (5 o'clock direction in FIG. 11) extending from one end (5 o'clock direction in FIG. 11) of each of the pair of sixth surfaces 423 in parallel with the fifth surface 422, and the fourth surface 421 may be a lower surface (6 o'clock direction in FIG. 11) that connects a lower end of the fifth surface 422, a lower end of each of the pair of sixth surfaces 423, and a lower end of the seventh surface 424 to each other.

The receiving portion 420 may form a third inner space S3 using the fourth surface 421, the fifth surface 422, the sixth surface 423, and the seventh surface 424, and the third inner space S3 may be configured to communicate with a second inner space S2 of the blocking portion 410.

The receiving portion 420 may be formed in the shape of a plate having no mesh holes, and may be located at a lower end of the blocking portion 410 to receive particles (e.g., spark particles) blocked by the blocking portion 410 in the third inner space S3.

In other words, when particles are discharged from the first inner space S2 to the outside due to the pressure in the first inner space S1, the particles may be blocked by the blocking portion 410 and may be moved to the third inner space S3 of the receiving portion 420.

In addition, the receiving portion 420 may be slidably coupled to the blocking portion 410. For example, a protrusion 413b may be formed on a lower end of each of a pair of third surfaces 413 of the blocking portion 410 so as to partially protrude downward (6 o'clock direction in FIG. 12), and a first depression 423a may be formed in an upper end of each of the pair of sixth surfaces 423 of the receiving portion 420 so as to be partially depressed downward (6 o'clock direction in FIG. 12).

More specifically, the protrusion 413b may be provided in a shape in which the width of the protrusion gradually increases downward such that a lower end of the protrusion has the largest width, and the first depression 423a may be provided in a shape in which the entrance of the first depression has the smallest width so as to correspond in shape to the protrusion 413b. At this time, the first depression 423a may be formed in the shape of a larger recess than the protrusion 413b such that the protrusion 413b can be slidably inserted into the first depression.

Of course, the first depression may be formed in the lower end of each of the pair of third surfaces 413, and the protrusion may be formed on the upper end of each of the pair of sixth surfaces 423.

As a result, particles discharged together with venting gas may be blocked by the blocking portion 410 and then received in the receiving portion 420 provided under the blocking portion 410, and the receiving portion 420 may be slidably separated from the blocking portion 410, whereby it is possible to easily remove the particles received in the third inner space S3 of the receiving portion 420.

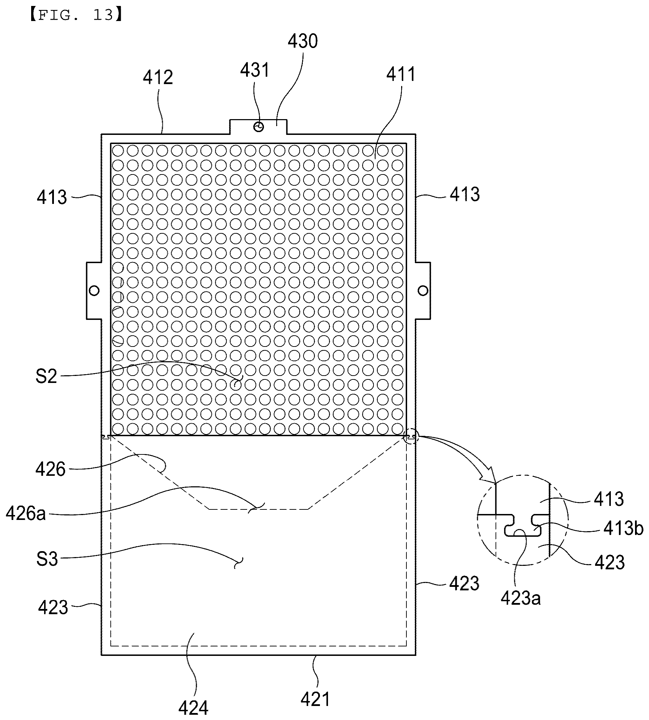

FIG. 13 is a view of a particle blocking member according to a fifth embodiment of the present invention when viewed from the inside.

The particle blocking member 400 according to the fifth embodiment is identical in construction to the particle blocking member according to the fourth embodiment except that the particle blocking member further includes a partition wall. The particle blocking member according to the fifth embodiment may be configured such that a receiving portion 420 includes a fourth surface 421, a fifth surface 422, a sixth surface 423, a seventh surface 424, and a partition wall 426.

The partition wall 426 may be formed between a second inner space S2 of a blocking portion 410 and a third inner space S3 of the receiving portion 420. The partition wall 426 may be configured to connect the vicinity of an upper end of the fifth surface 422 of the receiving portion 420, the vicinity of an upper end of each of the pair of sixth surfaces 423, and the vicinity of an upper end of the seventh surface 424 to each other.

In addition, the partition wall 426 may be provided with a communication hole 426a configured to allow the second inner space S2 and the third inner space S3 to communicate with each other therethrough. For example, the communication hole 426a may be formed in a central part of the partition wall 426.

Therefore, particles blocked by the blocking portion 410 may be moved to the third inner space S3 of the receiving portion 420 through the communication hole 426a, and even if vent gas is discharged from the first inner space S1, movement of the particles received in the third inner space S1 back to the second inner space S2 may be minimized by the partition wall 426.

In addition, the partition wall 426 may be configured such that, when the partition wall extends from the vicinity of the upper end of the fifth surface 422, the vicinity of the upper end of each of the pair of sixth surfaces 423, and the vicinity of the upper end of the seventh surface 424 to the central part (inside) thereof, the central part is located lower than the vicinity of each upper end. In other words, the partition wall 426 may be configured as an inclined surface that is inclined downward from each outer end to the central part.

In this case, particles that have not been discharged to the outside by the blocking portion 410 may be more easily moved to the third inner space S3 of the receiving portion 420 through the communication hole 426a along the inclined surface of the partition wall 426, whereby it is possible to prevent the movement of the particles to the second inner space S2 even if vent gas is discharged from the first inner space S1.

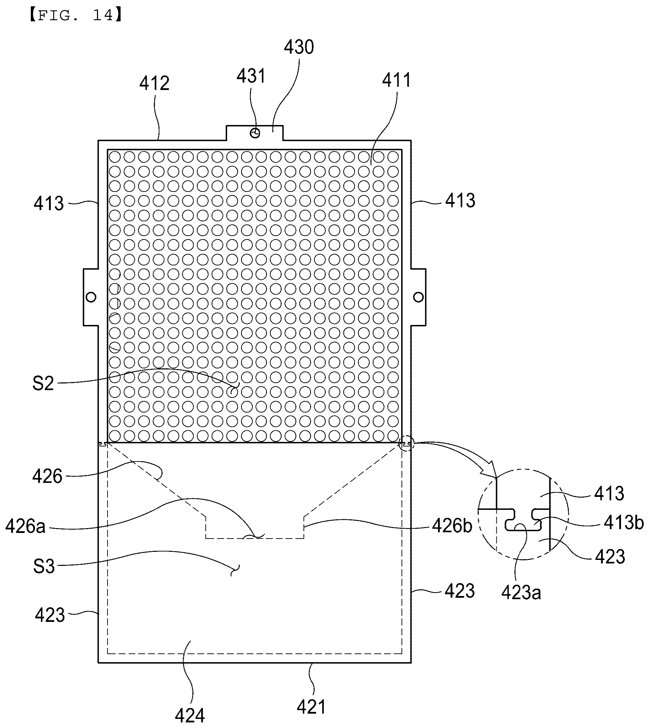

FIG. 14 is a view of a particle blocking member according to a sixth embodiment of the present invention when viewed from the inside.

The particle blocking member 400 according to the sixth embodiment is identical in construction to the particle blocking member according to the fourth embodiment except that the shape of a partition wall is different. The particle blocking member according to the sixth embodiment may be configured such that a receiving portion 420 includes a fourth surface 421, a fifth surface 422, a sixth surface 423, a seventh surface 424, and a partition wall 426.

The partition wall 426 may be provided with a communication channel 426b configured to allow a second inner space S2 and a third inner space S3 to communicate with each other therethrough. The communication channel 426b may be formed in the shape of a channel as the result of a part of a communication hole 426a extending downward.

The communication channel 426b may be formed in a central part of the partition wall 426, and particles that have not been discharged to the outside by a blocking portion 410 may be moved to the third inner space S3 of the receiving portion 420 through the communication channel 426b along an inclined surface of the partition wall 426.

In addition, since the communication channel 426b is a communication hole 426a partially extending downward from the central part of the partition wall 426 in the shape of a channel, it is possible to more reliably block the movement of the particles to the second inner space S2 even if vent gas is discharged from the first inner space S1.

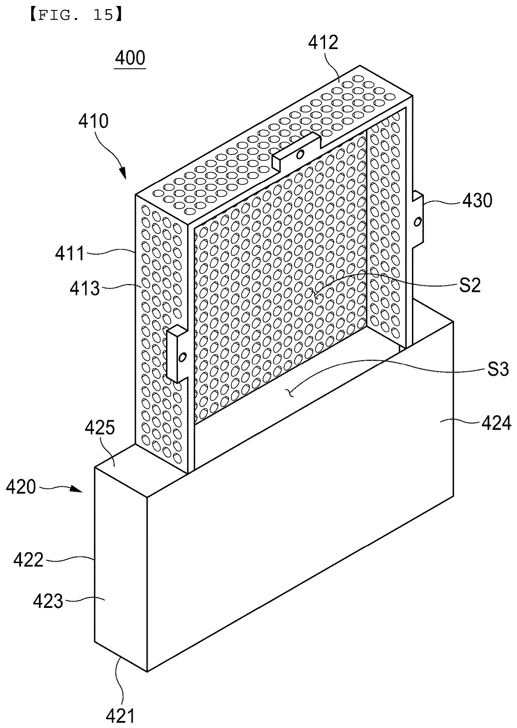

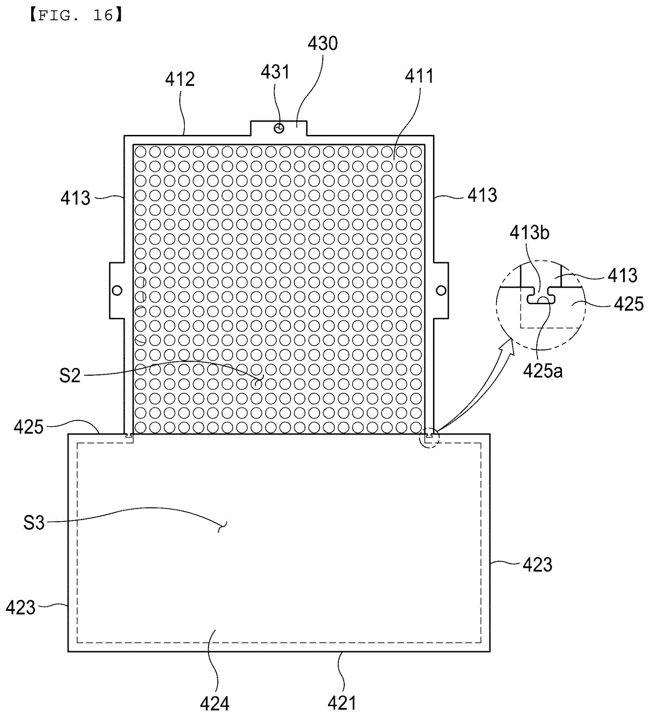

FIG. 15 is a perspective view of a particle blocking member according to a seventh embodiment of the present invention when viewed from the inside, and FIG. 16 is a view of the particle blocking member according to the seventh embodiment of the present invention when viewed from the inside.

The particle blocking member 400 according to the seventh embodiment is identical in construction to the particle blocking member according to the fourth embodiment except that the shape of a receiving portion 420 is different. The particle blocking member 400 according to the seventh embodiment may be configured such that the receiving portion 420 includes a fourth surface 421, a fifth surface 422, a sixth surface 423, a seventh surface 424, and an eighth surface 425.

The particle blocking member 400 according to the seventh embodiment may be configured such that the width (3 o'clock to 9 o'clock direction in FIG. 16) of each of the fifth surface 422 and the seventh surface 424 of the receiving portion 420 is greater than the width (3 o'clock to 9 o'clock direction in FIG. 16) of the first surface 411. In other words, the width of the receiving portion 420 may be greater than the width of a blocking portion 410.

Accordingly, the receiving portion 420 may include an eighth surface 425 extending from a lower end of the third surface 413 along an upper end of the fifth surface 422, an upper end of the sixth surface 423, and an upper end of the seventh surface 424, and the eighth surface 425 may be an upper surface (as shown 12 o'clock direction in FIG. 15) of the receiving portion 420.

At this time, the receiving portion 420 may be provided with a second depression 425a formed in an upper end of the eighth surface 425 so as to be partially depressed downward such that the receiving portion can be slidably coupled to the blocking portion 410.

The second depression 425a may be formed so as to correspond to a protrusion 413b formed on the lower end of the third surface 413 such that the second depression can be slidably coupled to the protrusion 413b.

More specifically, the protrusion 413b may be provided in a shape in which the width of the protrusion gradually increases downward such that a lower end of the protrusion has the largest width, and the second depression 425a may be provided in a shape in which the entrance of the second depression has the smallest width so as to correspond in shape to the protrusion 413b. At this time, the second depression 425a may be formed in the shape of a larger recess than the protrusion 413b such that the protrusion 413b can be slidably inserted into the second depression.

Of course, the first depression may be formed in the lower end of each of the pair of third surfaces 413, and the protrusion may be formed on the upper end of each of the pair of fifth surfaces 422.

In addition, the receiving portion 420 may be configured to have a width greater than the width of the blocking portion 410 so as to receive a larger volume of particles.

As a result, particles discharged together with venting gas may be blocked by the blocking portion 410 and then received in the receiving portion 420 provided under the blocking portion 410, and the receiving portion 420 may be slidably separated from the blocking portion 410, whereby it is possible to remove the particles received in the third inner space S3 of the receiving portion 420.

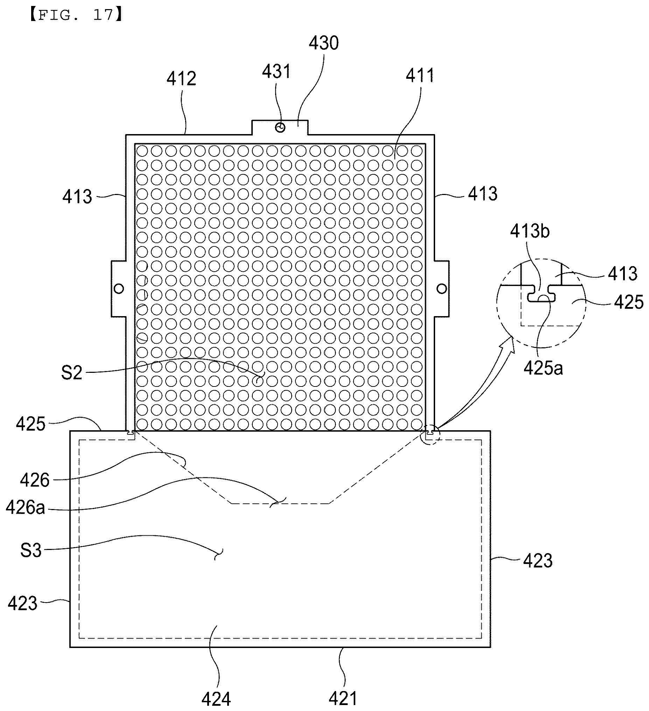

FIG. 17 is a view of a particle blocking member according to an eighth embodiment of the present invention when viewed from the inside.

The particle blocking member 400 according to the eighth embodiment is identical in construction to the particle blocking member according to the seventh embodiment except that the particle blocking member further includes a partition wall. The particle blocking member according to the seventh embodiment may be configured such that a receiving portion 420 includes a fourth surface 421, a fifth surface 422, a sixth surface 423, a seventh surface 424, an eighth surface 425, and a partition wall 426.

The partition wall 426 may be formed between a second inner space S2 of a blocking portion 410 and a third inner space S3 of the receiving portion 420, as previously described, and the partition wall may be provided with a communication hole 426a configured to allow the second inner space S2 and the third inner space S3 to communicate with each other therethrough.

In addition, the partition wall 426 may be configured as an inclined surface that is inclined downward from each outer end to a central part.

In this case, particles that have not been discharged to the outside by the blocking portion 410 may be moved to the third inner space S3 of the receiving portion 420 through the communication hole 426a along the inclined surface of the partition wall 426, whereby it is possible to prevent the movement of the particles to the second inner space S2 when the particles are scattered by vent gas discharged from the first inner space S1.

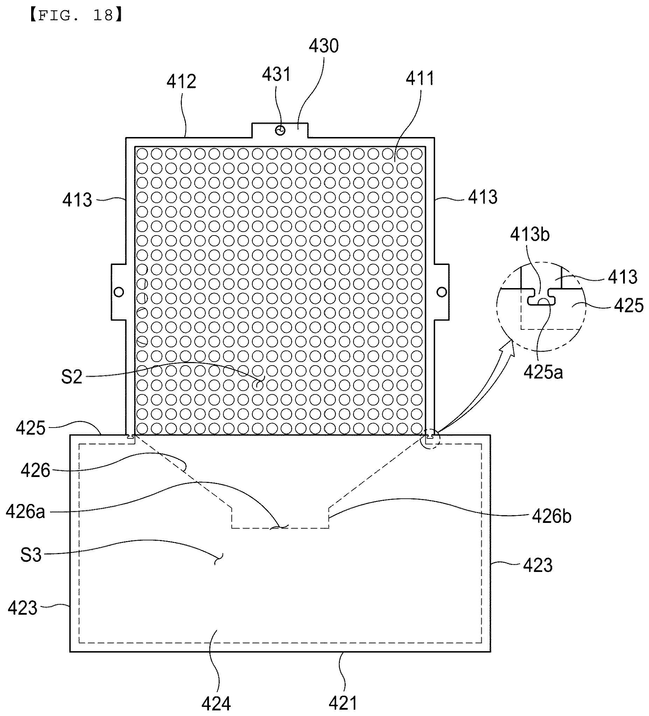

FIG. 18 is a view of a particle blocking member according to a ninth embodiment of the present invention when viewed from the inside.

The particle blocking member 400 according to the ninth embodiment is identical in construction to the particle blocking member according to the eighth embodiment except that the shape of a partition wall is different. The particle blocking member according to the eighth embodiment may be configured such that a receiving portion 420 includes a fourth surface 421, a fifth surface 422, a sixth surface 423, a seventh surface 424, an eighth surface 425, and a partition wall 426.

The partition wall 426 may be provided with a communication channel 426b configured to allow a second inner space S2 and a third inner space S3 to communicate with each other therethrough, and the communication channel 426b may be formed in the shape of a channel as the result of a part of a communication hole 426a extending downward.

The communication channel 426b may be formed in a central part of the partition wall 426, and particles that have not been discharged to the outside by a blocking portion 410 may be moved to the third inner space S3 of the receiving portion 420 through the communication channel 426b along an inclined surface of the partition wall 426.

In addition, since the communication channel 426b is a communication hole 426a partially extending downward from the central part of the partition wall 426 in the shape of a channel, it is possible to more reliably prevent the movement of the particles to the second inner space S2 when the particles are scattered by vent gas discharged from the first inner space S1.

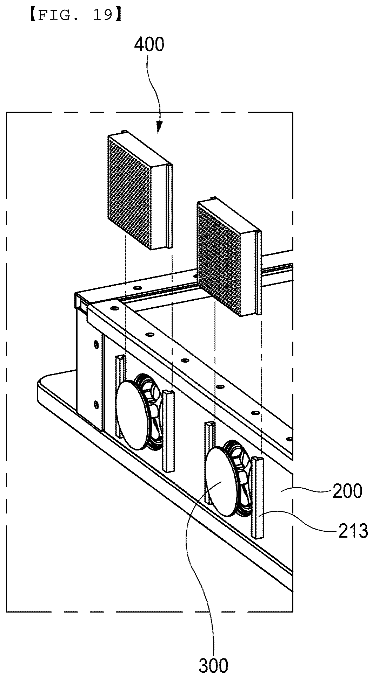

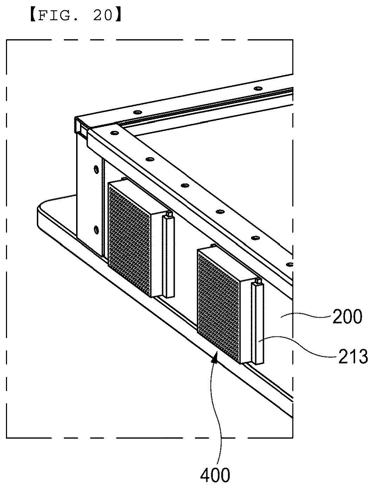

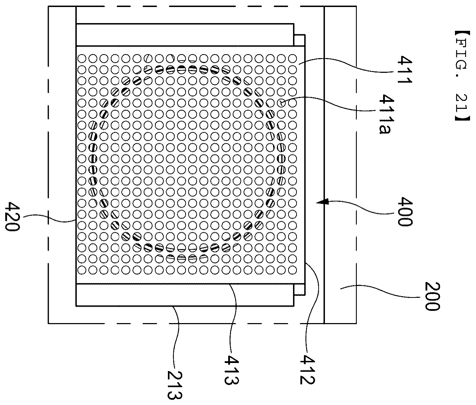

FIG. 19 is a perspective view showing the state of a particle blocking member according to a tenth embodiment of the present invention before coupling to the housing unit, FIG. 20 is a perspective view showing the state in which the particle blocking member according to the tenth embodiment of the present invention is coupled to the housing unit, and FIG. 21 is a view showing the state in which the particle blocking member according to the tenth embodiment of the present invention is coupled to the housing unit.

The particle blocking member 400 according to the tenth embodiment is identical in construction to the particle blocking member according to the first embodiment except that the structure in which the particle blocking member is attached to and detached from the housing body 210 is different.

The housing body 210 may be provided at the side surface thereof with a pair of guide portions 213 spaced apart from each other by a predetermined distance such that a connecting member 430 can be slidably inserted thereinto. If the guide portions 213 are provided at the side surface of the housing body 210, the particle blocking member 400 may be slidably inserted into the guide portions 213, whereby the particle blocking member may be coupled to the housing body 210.

The guide portions 213 may be provided in the vicinity of the through-hole 211 in which the venting device 300 is mounted.

For example, the guide portion 213 may be provided on both sides of the through-hole 211 such that the extension member 430 extending from one end of a third surface 413 can be slidably inserted thereinto.

In addition, for example, the guide portion 213 may be open at the top (12 o'clock direction in FIG. 19) such that the extension member 430 can be downwardly slidably inserted thereinto from above, and may be closed at the bottom (6 o'clock direction in FIG. 19) such that the extension member 430 may be seated therein. As another example, the guide portion 213 may be open at the top and bottom, and the extension member 430 may be slidably inserted into the guide portion by forced press fitting.

In addition, as previously described, a first fastening hole 212 may be formed in the guide portion 213, and a second fastening hole 431 may also be formed in the connecting member 430. In this case, primary coupling of the particle blocking member 400 may be achieved as the connecting member 430 is slidably inserted into the guide portion 213, and secondary coupling of the particle blocking member may be achieved as the fastening member 500 extends through both the first fastening hole 212 and the second fastening hole 431 for fastening.

Although, in the tenth embodiment of FIGs. 19 to 21, the particle blocking member according to the first embodiment, i.e., the particle blocking member having the first mesh holes formed in the first surface and having the receiving portion formed by the fourth surface, has been described by way of example, it is obvious that the particle blocking member according to each of the second to ninth embodiments can also be coupled to the housing body in the same manner as in the tenth embodiment.

In addition, although the particle blocking member according to each of the fourth to ninth embodiments is coupled to the housing body in the state in which the receiving portion is coupled to the blocking portion, the blocking portion may first be coupled to the housing body and then the receiving portion may be slidably coupled to the blocking portion coupled to the housing body, as another example.

In addition, although the receiving portion according to each of the fourth to ninth embodiments has been described by way of example as having the first mesh holes formed in the first surface, as in the blocking portion according to the first embodiment, it is obvious that the same can also apply to the blocking portion according to each of the second and third embodiments.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

100: Battery cell
200: Housing unit
210: Housing body
211: Through-hole 212: First fastening hole
213: Guide portion
220: Housing cover
300: Venting device
310: Base member 311: Passage portion
320: Opening and closing portion
330: Elastic member
400: Particle blocking member
410: Blocking portion
411: First surface 411a: First mesh holes
412: Second surface 412a: Second mesh holes
413: Third surface
413a: Third mesh holes 413b: Protrusion
420: Receiving portion
421: Fourth surface
422: Fifth surface
423: Sixth surface 423a: First depression
424: Seventh surface
425: Eighth surface 425a: Second depression
426: Partition wall
426a: Communication hole 426b: Communication channel
430: Connecting member 431: Second fastening hole
500: Fastening member
S1: First inner space
S2: Second inner space
S3: Third inner space

## Claims

1. A secondary battery comprising:
at least one battery cell;
a housing unit having a first inner space configured to receive the at least one battery cell, the housing unit having a side surface with a through-hole;
a venting device mounted in the through-hole, the venting device being configured to discharge gas generated in the housing unit to outside of the housing unit; and
a particle blocking member detachably coupled to an outside of the side surface of the housing unit, the particle blocking member covering the venting device, wherein
the particle blocking member comprises:
a blocking portion comprising a first surface facing the side surface of the housing unit, a second surface extending from an upper end of the first surface toward the side surface of the housing unit, and a pair of third surfaces extending from both side ends of the first surface toward the side surface of the housing unit, the blocking portion having a second inner space defined therein; and
a receiving portion at a lower end of the blocking portion.

2. The secondary battery according to claim 1, wherein at least one of the first surface, the second surface, or the third surface is a mesh plate having a mesh hole formed therein.

3. The secondary battery according to claim 2, wherein the mesh hole has a diameter less than a size of a particle that the venting device is configured to discharge.

4. The secondary battery according to claim 3, wherein the mesh hole has an inner diameter gradually decreasing toward the side surface of the housing unit.

5. The secondary battery according to claim 2, wherein the receiving portion comprises:
a fifth surface extending from a lower end of the first surface facing the side surface of the housing unit;
a pair of sixth surfaces extending from both side ends of the fifth surface toward the side surface of the housing unit;
a seventh surface extending from one end of each of the pair of sixth surfaces in parallel with the fifth surface; and
a fourth surface connecting a lower end of the fifth surface, a lower end of each of the pair of sixth surfaces, and a lower end of the seventh surface to each other.

6. The secondary battery according to claim 5, wherein
the receiving portion further comprises a partition wall formed between the second inner space of the blocking portion and a third inner space of the receiving portion, and
the partition wall has a communication hole allowing the second inner space and the third inner space to communicate with each other therethrough.

7. The secondary battery according to claim 6, wherein the partition wall further includes a communication channel formed in a channel shape as a result of extension of a part of the communication hole.

8. The secondary battery according to claim 6, wherein
a width of the fifth surface is greater than a width of the first surface, and
the receiving portion further comprises an eighth surface extending from a lower end of the third surface along an upper end of the fifth surface.

9. The secondary battery according to claim 6, wherein the receiving portion is slidably coupled to the blocking portion.

10. The secondary battery according to claim 2, further comprising a connecting member extending from one end of at least one of the first surface, the second surface, the third surface, and the fourth surface, the connecting member allowing the particle blocking member to be coupled to the side surface of the housing unit therethrough.

11. The secondary battery according to claim 10, wherein
a first fastening hole is formed on the side surface of the housing unit, and
a second fastening hole communicating with the first fastening hole is formed in the connecting member.

12. The secondary battery according to claim 11, further comprising a fastening member extending through both the first fastening hole and the second fastening hole and fastening in a state in which the first fastening hole and the second fastening hole overlap each other.

13. The secondary battery according to claim 2, wherein
the receiving portion is a fourth surface connecting a lower end of the first surface and a lower end of each of the pair of third surfaces to each other, and
the fourth surface is formed in a plate shape having no mesh hole.

14. The secondary battery according to claim 2, wherein the venting device is a safety valve configured to open when a pressure in the first inner space is higher than a predetermined pressure and to close when the pressure in the first inner space is lower than the predetermined pressure.

15. The secondary battery according to claim 2, wherein the housing unit is a module housing unit or a pack housing unit.
